# EUROPÄISCHE PATENTANMELDUNG

(11) **EP 2 272 736 A1**
(43) Veröffentlichungstag der Anmeldung: **12.01.2011**
(21) Anmeldenummer: 10002689.7
(22) Anmeldetag: 15.03.2010
(51) Int. Cl.: B62D 13/04, B62D 13/06, B62D 5/26

(54) **Steuerbare Achse für einen Anhänger**

(30) Priorität: 09.07.2009 IT MI20091217
(71) Anmelder: A.D.R. S.p.A., 21040 Uboldo (IT)
(72) Erfinder: Radrizzani, Flavio, 21040 Uboldo (IT)
(74) Vertreter: Mayer, Hans Benno

(57) **Zusammenfassung**

Steuerbare Achse (1) für einen Anhänger, die an ihren Enden mit Trommeln (2,3) ausgerüstet ist, die dazu bestimmt sind, lenkbare Räder aufzunehmen, unter Einsatz von Steuergestängen, die mit einer Lenkstange (12) wirkverbunden sind, die die Stange einer Kolben-Zylindereinheit (13) bildet, die am Körper der Achse befestigt ist, wobei die Kolben-Zylindereinheit (13) Anschlußstutzen zum Zuführen bzw. zum Abführen einer unter Druck stehenden Flüssigkeit aufweist und an ihren Enden durch Kopfstücke abgeschlossen ist, welche, unter Vorsehung von Dichtungen, die verschiebbare Stange (12) der Kolben-Zylindereinheit umgreifen und gegen eine unter Druck stehende Flüssigkeit abdichten, wobei im Zentrum der Kammer der Kolben-Zylindereinheit ein Anschlagring befestigt ist, der eine Bohrung aufweist, zum Zuführen oder zum Abführen einer unter Druck stehenden Flüssigkeit, wobei der Anschlagring einen Raum bestimmt, der den freien Durchgang eines Positionierringes erlaubt, der an der Stange befestigt ist, wobei auf beiden Seiten des Positionierringes verschiebbare Ringkörper vorgesehen sind, die geeignet sind, auf den Positionierring einzuwirken und die am Anschlagring befestigbar sind.

## Beschreibung

Die vorstehende Erfindung betrifft eine steuerbare Achse für einen Anhänger.

Steuerbare Achsen finden Anwendung für Anhänger. Anhänger weisen ein ständig zunehmendes Gewicht auf, dies aufgrund der zunehmenden Abmessung sowie den großen Massen für diese Anhänger, die von zwei oder mehreren zueinander angenäherten Achsen getragen werden.

Die neue Bauart von Anhängern hat den Vorteil gegenüber herkömmlichen Anhängern, dass ein Teil des Gewichtes des Anhängers auf Verbindungsteile zum Traktor abgeleitet wird, wodurch der zweifache Vorteil erreicht wird, nämlich einmal, dass die Belastung auf die Achsen des Anhängers vermindert wird und des weiteren, dass das Aufliegen des Traktors auf der Fahrbahn verbessert wird, wodurch eine verbesserte Fahrbarkeit erreicht wird.

Es ist ferner aus dem Stand der Technik bekannt geworden, dass die bauliche Ausführung nebeneinander liegender Achsen ein Befahren von Kurven durch den Anhänger erschwert, dies aufgrund eines starren Radstandes für den Anhänger, was zur Notwendigkeit geführt hat, ein oder zwei steuerbare Achsen vorzusehen.

So ist es aus dem Stand der Technik bekannt geworden, selbststeuernde Achsen einzusetzen, die aufgrund ihres geometrischen Aufbaues ermöglichen, der vom Traktor auf den gezogenen Anhänger übertragenen Spur zu folgen.

Die selbststeuernde Achse erfüllt ihre Funktion, sofern der Anhänger mit nebeneinander liegenden Achsen in Vorwärtsrichtung bewegt wird, wodurch es dem Anhänger ermöglicht wird, der vom Traktor vorgegebenen Spur einwandfrei zu folgen.

Diese bekannte, selbststeuernde Achse arbeitet unidirektional und dies führt dazu, dass der Anhänger in keinster Weise während seiner Rückwärtsfahrt steuerbar ist; aus diesem Grund wird die selbststeuernde Achse während der Rückwärtsfahrt des Anhängers durch mehrere Haltezylinder blockiert, wobei die Räder des Anhängers gegenüber der Längsachse des Anhängers ausgerichtet sind.

Die Masse des Anhängers, die wesentlich höher ist als die Masse des Traktors, verschlechtert dieses unerwünschte Fahrverhalten und in einigen Fällen wird es überhaupt nicht möglich sein, mit dem Anänger eine Rückwärtsfahrt durchzuführen, da die Räder des Traktors einem Rutschvorgang unterworfen sind, und daher ein Bewegen des Anhängers nicht ermöglicht wird.

Es sind bereits mehrere Vorschläge zum Steuern des Lenkvorganges der Räder eines Anhängers, in Abhängigkeit von dem Fahrverlauf des Traktors, gemacht worden.

Die bekannten Lenkeinrichtungen, die üblicherweise hydraulisch ausgebildet sind, ermöglichen es, den Lenkvorgang der Räder eines Anhängers in Abhängigkeit der Lage des Traktors gegenüber dem Anhänger zu steuern.

Die Übertragung des Lenkvorganges wird üblicherweise über eine mechanische Vorrichtung durchgeführt und ist mit dem Traktor wirkverbunden, und ermöglicht es, auf eine Mechanik einzuwirken, die auf die hydraulische Vorrichtung des Anhängers einwirkt.

Ein Merkmal, dass für alle selbstlenkenden Achsen eines Anhängerfahrzeuges vorhanden ist, ist darin zu sehen, dass die Achsen, die mit einer Hilfssteuerung ausgerüstet sind und für Anhängerfahrzeuge zum Einsatz gelangen, mit einer Verbindungsstange zusammenarbeiten, die eine Synchronbewegung des rechten Rades sowie des linken Rades des Anhängers ermöglichen. Die Verbindungsstange für eine selbststeuernde Achse dient als Ausrichtvorrichtung sowie als Arretiereinrichtung.

Die bekannten mechanischen Vorrichtungen haben den Nachteil, dass sie einen erheblichen Platzbedarf haben und sich durch ein erhebliches Gewicht auszeichnen und in der Nähe der Felgen, die für die Aufnahme der Räder ausgebildet sind, störend sind, und ferner über Kolben-Zylindereinheiten gesteuert werden, die auf Lenkgestänge sowie eine Verbindungsstange einwirken, um somit Synchronität in den Lenkbewegungen des rechten und des linken Rades zu erzielen.

Es ist daher Aufgabe der vorstehenden Erfindung, eine lenkbare Achse für einen Anhänger oder ein ähnliches Fahrzeug vorzuschlagen, welche gegenüber dem Stand der Technik einen wesentlich vereinfachten Aufbau aufweist, und daher leichter ist und eine freie und ungestörte Bewegung der Räder des Anhängers bei Vorwärtsfahrt ermöglicht und ferner ermöglicht, den Steuervorgang der Räder bei Rückwärtsfahrt zu überwachen und zu arretieren.

Diese Aufgabe wird mit einer steuerbaren Achse für einen Anhänger erreicht, die an ihren Enden mit Trommeln ausgerüstet ist, die dazu bestimmt sind, lenkbare Räder aufzunehmen, unter Einsatz von Steuergestängen, die mit einer Lenkstange wirkverbunden sind, welche Stange eine Kolben-Zylindereinheit bildet, die am Achskörper befestigt ist, wobei die Kolben-Zylindereinheit mit Anschlüssen zum Zuführen bzw. zum Abfließen einer unter Druck stehenden Flüssigkeit aufweist und an den Enden durch Kopfstücke abgesperrt ist, welche unter Zwischenschaltung von Dichtungen die Stange der Kolben-Zylindereinheit verschiebbar und abgedichtet gegen eine unter Druck stehende Flüssigkeit aufnehmen, wobei im Zentrum der Kammer der Kolben-Zylindereinheit ein Anschlagring befestigt ist, der eine Bohrung aufweist, für die Zuführung und das Abfließen einer unter Druck stehenden Flüssigkeit, wobei der Anschlagring einen Raum bestimmt, der den freien Durchgang eines Positionierringes erlaubt, der an der Stange befestigt ist, und auf beiden Seiten des Positionierringes verschiebbare Ringkörper vorgesehen sind, die geeignet sind, auf den Positionierring einzuwirken und am Anschlagring befestigbar sind.

Weitere Merkmale der vorstehenden Erfindung können der folgenden Beschreibung, den Unteransprüchen und den beigefügten Zeichnungen entnommen werden.

Die erfindungsgemäße Einrichtung wird nun genauer anhand eines Ausführungsbeispieles beschrieben und in den beigefügten Zeichnungen dargestellt.
Figur 1 zeigt in perspektivischer Ansicht die steuerbare Achse gemäß der vorstehenden Erfindung;

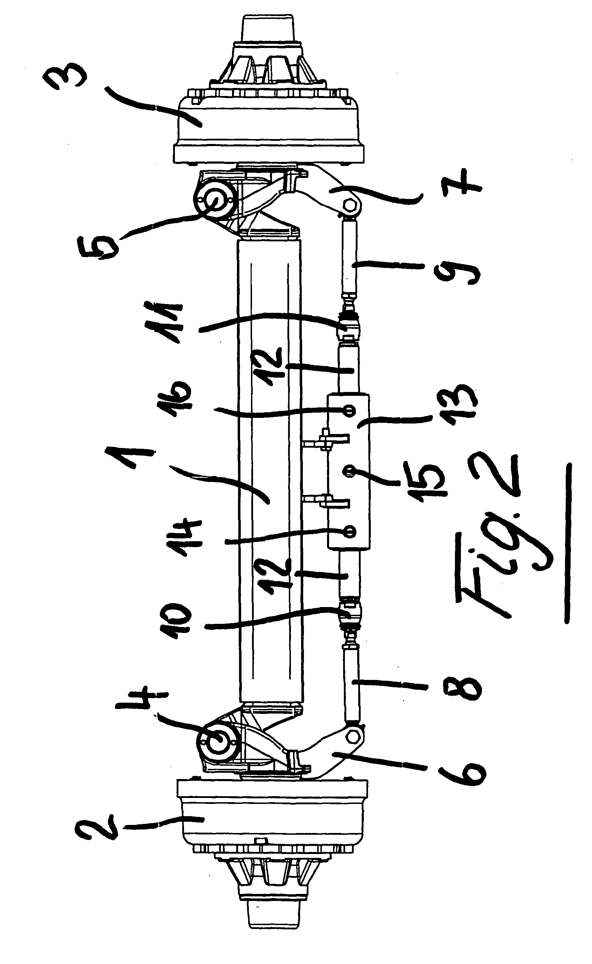

Figur 2 zeigt die Achse gemäß Figur 1 in einer Ansicht von oben;
Figur 3 zeigt die Steuervorrichtungen der Achse gemäß Figur 1 und 2;
Figur 4 zeigt im Schnitt die Steuervorrichtung während einer Fahrt im Leerlauf;
Figur 5 zeigt im Querschnitt die Steuervorrichtung bei Rückstellung der Räder auf Geradeausfahrt;
Figur 6 zeigt die Steuervorrichtung der Achse während einer geradlinigen Rückwärtsfahrt; und
Figur 7 zeigt die Steuervorrichtung der Achse zusammen mit zugeordneten Kontrolleinrichtungen.

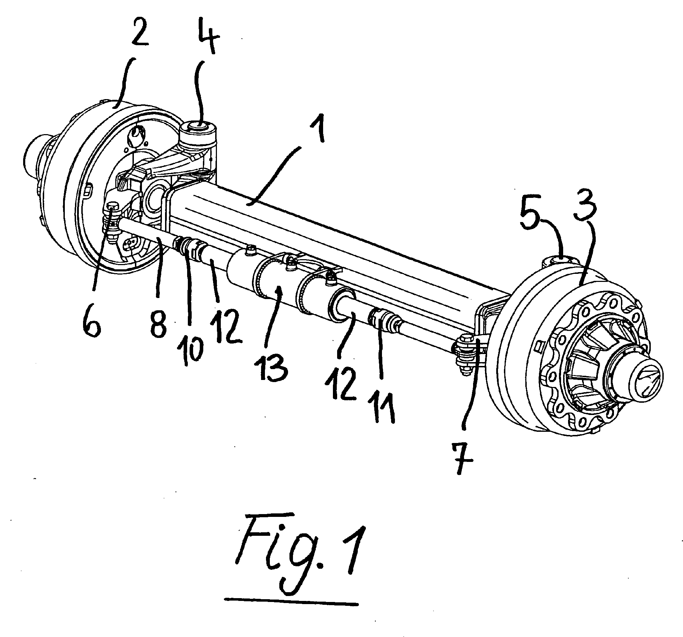

Wie der Figur 1 zu entnehmen ist, weist die Achse 1 an ihren Enden Trommeln 2 und 3 auf, die vorgesehen sind, um (nicht dargestellte) Räder eines Fahrzeuges, z.B. eines Anhängers der von einem Traktor gezogen wird, aufzunehmen.

Dank einer mechanischen Vorrichtung 4 und 5 sind die Trommeln 2 und 3 steuerbar ausgebildet, unter Zuhilfenahme von Steuergestängen 6 und 7.

Die Vorrichtung 4, 5 und die Steuergestänge 6, 7 sind aus dem Stand der Technik bekannt.

Die Steuergestänge 6 und 7 sind mit Steuergestängen 8 und 9 wirkverbunden, welche unter Zuhilfenahme eines Gelenkes 10 und 11 mit einer durchgehenden Stange 12 wirkverbunden sind, die Bestandteil einer Kolben-Zylindereinheit ist, die in ihrer Gesamtheit mit 13 gekennzeichnet wird. Die Kolben-Zylindereinheit 13 ist am Körper der Achse 1 befestigt.

Die Kolben-Zylindereinheit 13 weist Anschlüsse 14, 15 und 16 auf, die für das Zuführen bzw. das Abfließen einer unter Druck stehenden Flüssigkeit dient.

Der Zylinder ist normalerweise mit Flüssigkeit gefüllt:
Wird über die Anschlüsse 14 und 16 eine unter Druck stehende Flüssigkeit zugeführt, so erfolgt über die Bewegung der Ringkolben 26 und 27 ein Auslauf der Flüssigkeit über den Anschluss 15.

Ein Zuführen einer unter Druck stehenden Flüssigkeit über den Anschluss 15 führt hingegen zu einem Auslaufen der Flüssigkeit über die Anschlüsse 14 und 16, was ein Entfernen der Ringkolben 26 und 27 vom zentralen Block fördert, wodurch die Bewegung der Stange und somit der Lenkung freigegeben wird.

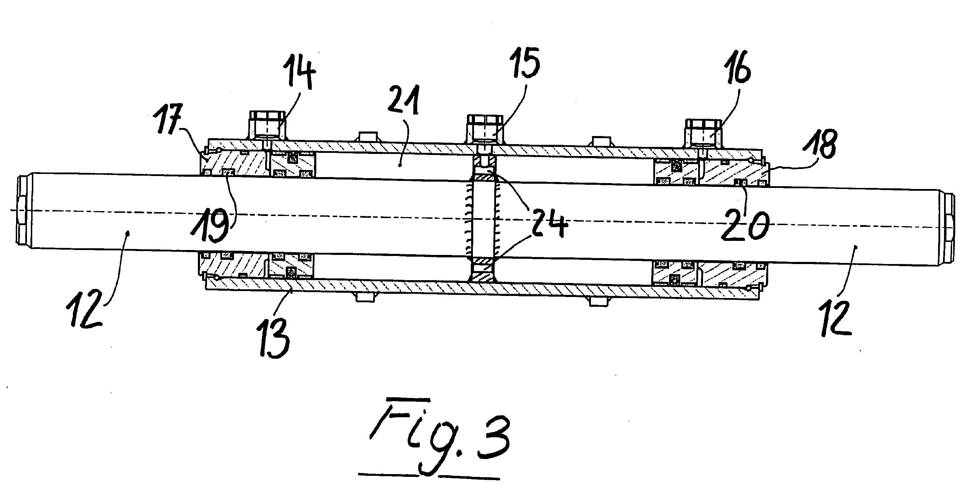

Der Figur 3 kann in einem Längsschnitt die Kolben-Zylindereinheit 13 entnommen werden, die in Längsrichtung mit Anschlüssen 14, 15 und 16 ausgerüstet ist.

Die Kolben-Zylindereinheit 13 ist an den Enden durch Kopfstücke 17 und 18 verschlossen, welche unter Zwischenschaltung von Dichtungsmitteln 19 und 20 die Stange 12 umgeben. Dadurch bleibt die Stange abgedichtet gegen eine unter Druck stehende Flüssigkeit verschiebbar. Die unter Druck stehende Flüssigkeit wird der inneren Kammer 21 der Kolben-Zylindereinheit 13 zugeführt.

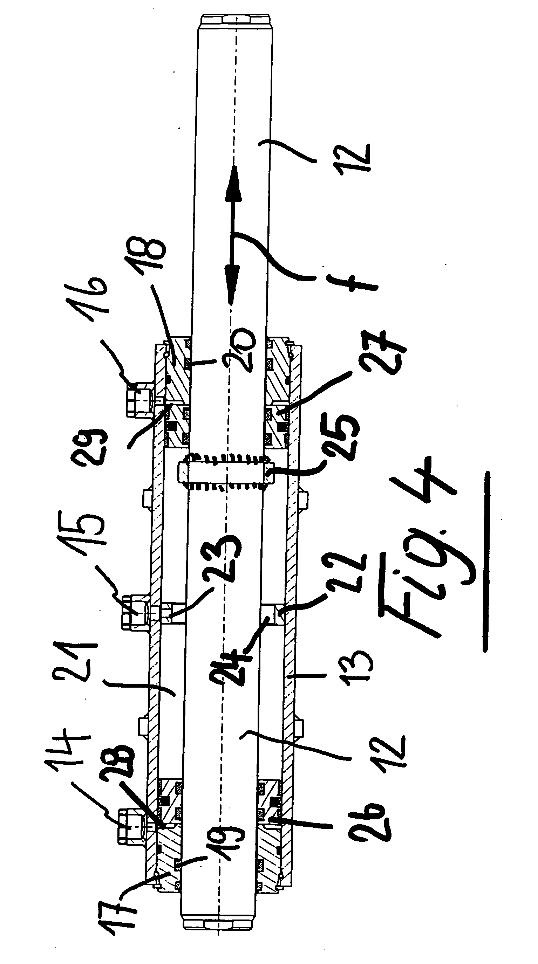

Sobald die Kammer 21 von der unter Druck stehenden Flüssigkeit befreit wurde, kann die Stange 12 ungehindert sowohl nach rechts als auch nach links verfahren werden, wie dies in Figur 4 durch den Pfeil (f) aufgezeigt ist.

Den beigefügten Figuren, insbesondere der Figur 4 kann entnommen werden, dass in der Mitte der Kammer 21 des Rohrkörpers der Kolben-Zylindereinheit 13 ein Anschlagring 22, z.B. durch einen Schweißvorgang, befestigt wurde. Dieser Anschlagring weist eine Bohrung 23 für das Zuführen einer unter Druck stehenden Flüssigkeit auf, z.B. über den Anschluss 15.

Der Anschlagring 22 weist ferner eine Durchgangsöffnung 24 auf, die einen freien Durchgang eines Positionierringes 25 erlaubt, der über einen Schweißvorgang an der Stange 12 befestigt wurde.

Die Durchgangsöffnung 24 wurde z.B. so gewählt, dass ein hydrodynamischer Widerstand beim Durchlaufen des Ringes 25 in der Zone 22 erfolgt, wodurch ein Dämpfen der Verschiebebewegung der Stange 12, die als Dämpfungseinrichtung der Steuervorrichtung dient, erfolgt.

An der verschiebbaren Stange 12 sind auf beiden Seiten des Ringes 25, Ringkörper 26, 27 nach Art von Kolben angeordnet, die mit Dichtungen sowie ringförmigen, außen- und innenliegenden Gleitkörpern ausgerüstet sind.

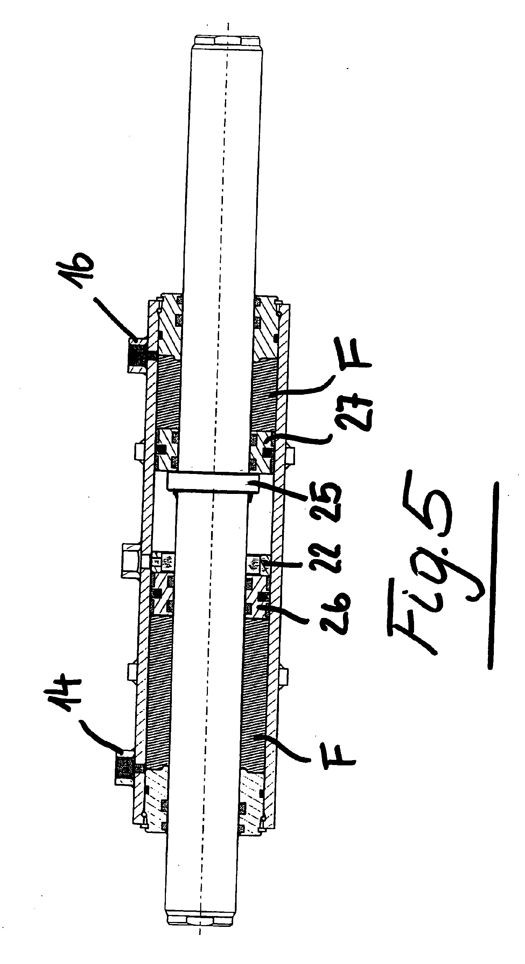

Im Inneren des rohrförmigen Körpers, in Übereinstimmung mit den Anschlüssen 14 und 16, sind kleine Kanäle 28 und 29 vorgesehen, die das Zuführen einer unter Druck stehenden Flüssigkeit (F) über die Anschlüsse 14 und 16 erlauben, wie z.B. in Figur 5 dargestellt.

Die rohrförmigen Körper 26 und 27 werden in Richtung des Anschlagringes 25 verschoben, um nach vollständigem Füllen der Kammer 21 mit einer Hydraulikflüssigkeit mit dem Positionierring 22 in Berührung zu gelangen.

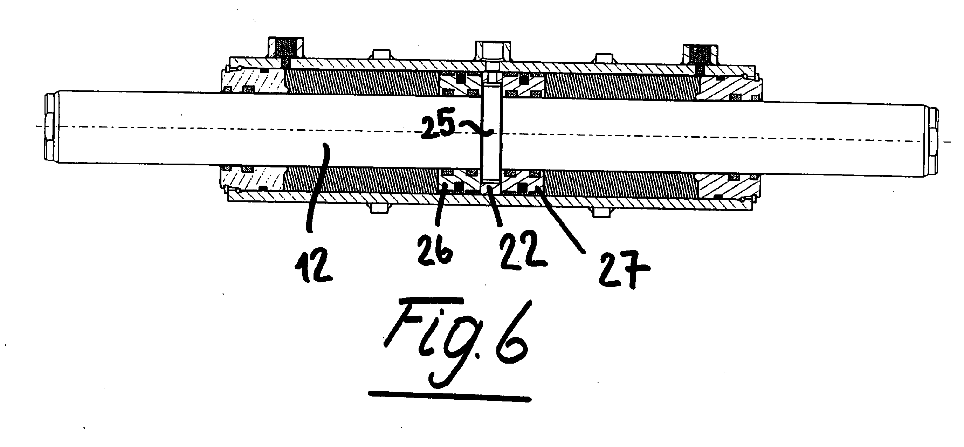

Daraus folgt, dass der Ring 25 in das Zentrum der Kolben-Zylindereinheit 13 verschoben wird, bis zu dem mittig vorgesehenen Anschlag oder Positionierring, wobei gegen diesen zentral vorgesehenen Ring 22, wie der Figur 6 zu entnehmen ist, auch die verschiebbaren Körper 26 und 27 anliegen, und unter der Wirkung des Druckes, der in der Flüssigkeit in der Kammer 21 vorliegt, die Stange 12 fest in der mittigen Position arretiert wird, wodurch die Trommeln 2 und 3 in ihrer Lage festgelegt werden, und die Möglichkeit geschaffen wird, dass durch den Anhänger eine gesteuerte Rückwärtsbewegung durchführbar ist.

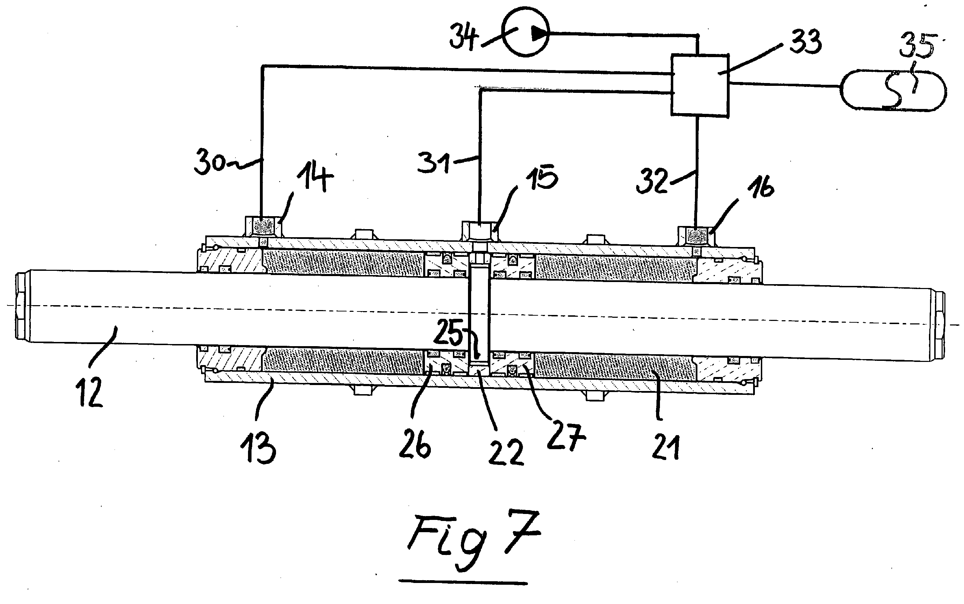

Eine weitere Ausführungsform der Erfindung ist in Figur 7 dargestellt. Die Anschlüsse 14, 15 und 16 stehen hier in Verbindung mit den Rohrleitungen 30, 31 und 32, die zu einer Steuervorrichtung 33 führen. Dieser Vorrichtung wird eine unter Druck stehende Flüssigkeit unter Zuhilfenahme einer Pumpe zugeführt. Desweiteren ist die Steuervorrichtung 33 in vorteilhafter Weise mit einem Druckspeicher 35 wirkverbunden. Der Druckspeicher 35 erlaubt es in der Kammer 21 der Kolben-Zylindereinheit 13 ständig einen leichten Druck aufrechtzuerhalten, wodurch ein Dämpfer oder Stabilisator der Lenkvorrichtung während der geradlinigen Bewegung geschaffen wird.

Die Steuervorrichtung 33 ermöglicht alternativ, sowohl die Arretiervorrichtung, wie in den Figuren 3, 4, 5 und 6 beschrieben, als auch den Stabilisator, der mit dem Druckspeicher 35 verbunden ist, zu betätigen, wie in Figur 7 dargestellt.

Die Funktion eines Dämpfers wird durch den hydrodynamischen internen Widerstand über die Bohrung 24 zwischen dem Ring 22 und dem Ring 25 aufgebaut.

## Patentansprüche

1. Steuerbare Achse (1) für einen Anhänger, die an ihren Enden mit Trommeln (2, 3) ausgerüstet ist, die dazu bestimmt sind, lenkbare Räder aufzunehmen, unter Einsatz von Steuergestängen (4, 5, 6, 7), die mit einer Lenkstange (12) wirkverbunden sind, welche die Stange einer Kolben-Zylindereinheit (13) bildet, die am Körper der Achse (1) befestigt ist,
**dadurch gekennzeichnet,**
**dass** die Kolben-Zylindereinheit (13) Anschlußstutzen (14, 15, 16) zum Zuführen bzw. zum Abführen einer unter Druck stehenden Flüssigkeit aufweist und an ihren Enden durch Kopfstücke (17, 18) abgeschlossen ist, welche unter Vorsehung von Dichtungen (19, 20) die verschiebbare Stange (12) der Kolben-Zylindereinheit (13) umgreifen, und gegen eine unter Druck stehende Flüssigkeit abdichten, wobei im Zentrum der Kammer (21) der Kolben-Zylindereinheit (13) ein Anschlagring (22) befestigt ist, der eine Bohrung (23) aufweist, für die Zuführung und das Abfließen einer unter Druck stehenden Flüssigkeit, wobei der Anschlagring (22) einen Raum (24) bestimmt, der den freien Durchgang eines Positionierringes (25) erlaubt, der an der Stange (12) befestigt ist, und auf beiden Seiten des Positionierringes (25) verschiebbare Ringkörper (26, 27) vorgesehen sind, die geeignet sind, auf den Positionierring (25) einzuwirken und am Anschlagring (22) befestigbar sind.

2. Steuerbare Achse für einen Anhänger, nach Patentanspruch 1, **dadurch gekennzeichnet, dass** die Gestänge (6, 7) mit Steuerstangen (8, 9) wirkverbunden sind, und die Steuerstangen unter Zuhilfenahme eines Gelenkes (10, 11) mit einer durchlaufenden Stange (12) in Verbindung stehen, die Bestandteil der Kolben-Zylindereinheit (13) ist.

3. Steuerbare Achse für einen Anhänger, nach Patentanspruch 1, **dadurch gekennzeichnet, dass** die Kolben-Zylindereinheit (13), in Längsrichtung gesehen, Anschlüsse (14, 15, 16) aufweist, zum Zuführen bzw. zum Abführen einer unter Druck stehenden Flüssigkeit.

4. Steuerbare Achse für einen Anhänger, nach Patentanspruch 1, **dadurch gekennzeichnet, dass** im Inneren der Kolben-Zylindereinheit (13) zentral ein Anschlagring (22) angeordnet ist, der Bohrungen (23) aufweist, die für das Zuführen einer unter Druck stehenden Flüssigkeit über einen außenliegenden Anschluss (15) dienen.

5. Steuerbare Achse für einen Anhänger, nach Patentanspruch 1, **dadurch gekennzeichnet, dass** der Anschlagring (22) eine Ausnehmung (24) aufweist, welche den freien Durchgang eines Positionierringes (25) erlaubt, der an der Stange (12) der Kolben-Zylindereinheit (13) befestigt ist.

6. Steuerbare Achse für einen Anhänger, nach Patentanspruch 1, **dadurch gekennzeichnet, dass** der Anschlagring (22) eine Ausnehmung (24) festlegt, und der Durchgang des Ringes (25) einen hydrodynamischen Widerstand für die Flüssigkeit bildet, der einen Dämpfer für die Lenkeinrichtung zum Dämpfen der Bewegung der Stange bildet.

7. Steuerbare Achse für einen Anhänger, nach Patentanspruch 1, **dadurch gekennzeichnet, dass** in Übereinstimmung mit den äußeren Anschlüssen (17, 18) kleine Kanäle (28, 29) gebildet sind, die das Zuführen einer unter Druck stehenden Flüssigkeit ermöglichen.

8. Steuerbare Achse für einen Anhänger, nach Patentanspruch 1, **dadurch gekennzeichnet, dass** die Anschlüsse (14, 15, 16) der Kolben-Zylindereinheit (13) über Rohrleitungen (30, 31, 32) mit einer Steuervorrichtung (33) in Verbindung stehen, welcher unter Druck stehende Flüssigkeit über eine Pumpe (34) zugeführt wird.

9. Steuerbare Achse für einen Anhänger, nach Patentanspruch 1, **dadurch gekennzeichnet, dass** die Steuervorrichtung (33) mit einem Druckspeicher (35) wirkverbunden ist, um in der Kammer (21) der Kolben-Zylindereinheit (13) permament einen kleinen Druck aufrechtzuerhalten.
